# EUROPEAN PATENT SPECIFICATION

(11) **EP 3 797 584 B1**
(45) Date of publication and mention of the grant of the patent: **15.05.2024**
(21) Application number: 19200069.3
(22) Date of filing: 27.09.2019
(51) Int. Cl.: A01K 5/02

(54) **METHOD AND MOTORIZED FEED VEHICLE FOR FEEDING FUR ANIMALS**
VERFAHREN UND MOTORISIERTES FÜTTERUNGSFAHRZEUG ZUR FÜTTERUNG VON PELZTIEREN
PROCÉDÉ ET VÉHICULE MOTORISÉ POUR L'ALIMENTATION D'ANIMAUX À FOURRURE

(43) Date of publication of application: 31.03.2021
(73) Proprietor: Hedensted Gruppen A/S, 8722 Hedensted (DK)
(72) Inventor: MADSEN, Jens Jørgen, 5220 Odense SØ (DK); CHRISTIANSEN, Kim, DK-5464 Brenderup (DK)
(74) Representative: COPA Copenhagen Patents

(56) References cited:
- EP-A1- 2 878 194
- WO-A1-2008/101500
- WO-A1-2015/178763

## Description

### Field of the Invention

The present invention relates to a method and a motorized feed vehicle for feeding fur animals cages, especially minks, in cages arranged in rows.

### Background of the Invention

It is known to feed minks in rows of cages by using a manned vehicle operated by an operator handling a mouth piece of a feed-delivering system to deliver a portion of feed to the top wall of the cages. The operator can control the feed-delivering system to deliver a predetermined amount of feed to each cage and additionally control the feed-delivering system to deliver a feed portion different from, e.g. smaller than, the predetermined amount of feed if an amount of feed is leftover on the cage.

Additionally, methods and manned and unmanned feed vehicles are known for delivering individually measured amounts of feed to cages in rows of cages, see e.g. EP 2 608 658 B1 and EP 2 878 194 A1, the latter being the prior art closest to the claimed invention.

However, a need still exists for a method and a feed vehicle for optimal feeding and thereby breeding of the animals preventing overfeeding of the animals and additionally preventing waste of feed in case the animals do not eat the delivered feed.

### Summary of the Invention

The object of the present invention is to provide a method and a feed delivering system providing an optimal feeding of the animals and preventing excessive delivering of feed and thereby waste of feed. The above object and additional objects are obtained according to the present invention by a method of feeding fur animals, such as minks, in cages arranged in rows by means of a motorized feeding vehicle, the method comprising:
- during a feed delivering session, moving the feed vehicle along a row of cages and for each cage:
   - determining the amount of feed leftover on the cage by means of an electronic detector, such as a 3D camera or 3D scanner arranged on the feeding vehicle,
   - storing the amount of feed leftover on the cage in a database,
   - determining an individually metered amount of feed based on a) a planned amount of feed to be delivered to the given cage according to a feeding scheme, b) the determined amount of feed leftover on the cage, i.e. not eaten, and c) a determined and stored amount of feed leftover on the cage, i.e. not eaten, during at least an immediately previous feed delivering session, and
- delivering the determined individually metered amount of feed to the given cage.

By precisely measuring the feed leftover on the cage and determining the amount to be delivered to the cage based on the amount of feed leftover during the previous feed-delivering session and the planned amount of feed to be delivered according to the feeding scheme, it is possible to deliver the amount of feed providing the best feeding and health of the animals and preventing waste of feed.

Determining the individually metered amount of feed to be delivered to a given cage may additionally be based on a measuring of the weight of the mink(s) in the cage. The weight of similar animals can be estimated by weighting the animal(s) by a weighing device in a number of cages.

The feeding scheme comprises information about the planned total amount of feed to be delivered to the cage per day, the number of feed-delivering sessions per day, such as 1 to 4 feed-delivering sessions per day, and/or the amount of feed to be delivered to a cage in each feed-delivering session of a day and optionally also the time of the day for the feed-delivering session(s), such as during dawn, the middle of the day, the twilight or the night.

The feeding scheme may also comprise information about the above daily amount of feed to be delivered to the cages in the different periods of the life cycle of the animals, the life cycle being divided into 3 to 10 periods, such as 4 to 9 periods or especially 6 to 9 periods.

According to an embodiment, the determined individually metered amount of feed delivered to the cage during the feed-delivering session is based on the amount of feed leftover on the cage, i.e. not eaten, during 1, 2, 3, 4, 5, 6, 7 or 8 immediately previous feed delivering sessions.

By determining the amount of feed to be delivered based on the amount of feed leftover during a number of the previous feed-delivering sessions, it is possible to more accurately determine the exact amount of feed needed by the animals and thereby to be delivered during a feed-delivering session. Additionally, the feeding scheme can be adjusted or changed to be adapted to the need of the animal(s) in the cage in question.

According to an embodiment, the determined individually metered amount of feed delivered to the cage during the feed-delivering session is stored in the database, thereby allowing for the above adaption of the amount of feed needed by the animal in question and allowing for the prevention of waste of feed.

According to an embodiment, the determined individually metered amount of feed delivered to the cage during the feed-delivering session is further based on the amount of feed delivered to the cage during 1, 2, 3, 4, 5, 6, 7 or 8 immediately previous feed-delivering sessions.

Storing the information on the amount of feed delivered during a number of previous feed-delivering sessions further improves the ability of adapting the amount of feed to that needed by the animal in question and allows for preventing waste of feed.

According to an embodiment, the determined amount of feed leftover on a cage during a feed-delivering session, alternatively a feed leftover ratio between the determined amount of feed leftover on the cage and a specified amount of feed, is divided into a number of at least two groups of feed leftover comprising a group of a low amount of feed leftover, said group having an upper limit for the above amount of feed leftover or the above ratio, and a group of a high amount of feed leftover, said group having a lower limit for the above amount of feed leftover or the above ratio.

According to an embodiment, the above specified amount of feed is the amount of feed delivered to the cage during the immediately previous feeding session.

According to an embodiment, the specified amount of feed is the amount of feed that is planned according to the feeding scheme to be delivered to the cage during the feed-delivering session According to an embodiment, the above ratio for the lower limit is between 0.1 to 0.6.

According to an embodiment, the above ratio for the upper limit is between 0.1 and 0.6.

The upper limit of the group of a low amount of feed leftover can be equal to the lower limit of the group of a high amount og feed leftover, whereby the number of groups of feed leftover is two groups.

According to an embodiment, the lower limit of the group of a high amount of feed leftover is higher than the upper limit of the group of a low amount of feed leftover, and one or more groups of an intermediate amount of feed leftover is provided between the group of a low amount of feed leftover and the group of a high amount of feed leftover.

According to an at present preferred embodiment, a single group of an intermediate amount of feed leftover is provided between the group of a low amount of feed leftover and the group of a high amount of feed leftover, a lower limit of the group of an intermediate amount of feed leftover being equal to the upper limit of the group of a low amount of feed leftover and an upper limit of the group of an intermediate amount of feed leftover being equal to the lower limit of the group of a high amount of feed leftover.

The determined individually metered amount of feed delivered to a cage during a feeding session can be based on one or more of the following set of rules:
a(i) if, during a feeding session, the determined amount of feed leftover on a cage belongs to the group of an intermediate amount of feed leftover, and the determined amount of feed leftover on the cage during the immediately previous feeding session belonged to the group of a low amount of feed leftover,
   then a full planned amount of feed according to the feeding scheme is delivered to the cage,
a(ii) if, during a feeding session, the determined amount of feed leftover on a cage belongs to the group of an intermediate amount of feed leftover, and the determined amount of feed leftover on the cage during the immediately previous feeding session belonged to the group of an intermediate amount of feed leftover,
   then a full planned amount of feed according to the feeding scheme is delivered to the cage,
a(iii) if, during a feeding session, the determined amount of feed leftover on a cage belongs to the group of an intermediate amount of feed leftover, and the determined amount of feed leftover on the cage during the immediately previous feeding session belonged to the group of a high amount of feed leftover,
   then a full planned amount of feed according to the feeding scheme is delivered to the cage.
b(i) if, during a feeding session, the determined amount of feed leftover on a cage belongs to the group of a low amount of feed leftover, and the determined amount of feed leftover on the cage during the immediately previous feeding session belonged to the group of a low amount of feed leftover,
   then a full planned amount of feed according to the feeding scheme is delivered to the cage,
b(ii) if, during a feeding session, the determined amount of feed leftover on a cage belongs to the group of a low amount of feed leftover, and the determined amount of feed leftover on the cage during the immediately previous feeding session belonged to the group of an intermediate amount of feed leftover,
   then a full planned amount of feed according to the feeding scheme is delivered to the cage,
b(iii) if, during a feeding session, the determined amount of feed leftover on a cage belongs to the group of a low amount of feed leftover, and the determined amount of feed leftover on the cage during the immediately previous feeding session belonged to the group of a high amount of feed leftover,
   then a full planned amount of feed according to the feeding scheme is delivered to the cage.
c(i) if, during a feeding session, the determined amount of feed leftover on a cage belongs to the group of a high amount of feed leftover, and the determined amount of feed leftover on the cage during the immediately previous feeding session belonged to the group of a low amount of feed leftover,
   then 25-75% of a full planned amount of feed according to the feeding scheme is delivered to the cage,
c(ii) if, during a feeding session, the determined amount of feed leftover on a cage belongs to the group of a high amount of feed left over, and the determined amount of feed leftover on the cage during the immediately previous feeding session belonged to the group of an intermediate amount of feed leftover,
   then 25-75% of a full planned amount of feed according to the feeding scheme is delivered to the cage,
c(iii) if during a feeding session the determined amount of feed leftover on a cage belongs to the group of a high amount of feed left over, and the determined amount of feed leftover on the cage during the immediately previous feeding session belonged to the group of a high amount of feed leftover,
   then no feed is delivered to the cage, and optionally an alarm is given.

Moreover, the present invention relates to a motorized feed vehicle for carrying out the method according to any of the claims 1-10, wherein the feed vehicle comprises:
- a front end and a rear end,
- a frame supported by moving elements, such as wheels, and carrying a feed container with at least one inner space for storing feed, especially pasty mink feed,
- a steering arrangement for steering the vehicle,
- a power system for powering the vehicle, e.g. an electrical power system powered by a rechargeable battery,
- a feed-delivering device configured for delivering feed on a cage and comprising a feed-conveying arrangement, such as a tubing, being at an upstream end connected to the feed in the feed container and being at a downstream end provided with an outlet, such as an outlet opening,
- a control unit configured for determining the position of the feed vehicle and determining that the vehicle has reached a given position for delivering feed to a corresponding given cage,
   - the control unit comprising or having access to a database with a feeding scheme with data about a planned amount of feed to be delivered to each of the cages during a feeding session,
- a detector, such as a 3D camera or 3D scanner, for determining the amount of feed leftover on a cage,
- the control unit additionally configured to control the feed-delivering device to deliver an individually metered feed portion to the cage, the individually metered feed portion being determined based on a) the planned amount of feed to be delivered to the cage according to the feeding scheme, b) the determined amount of feed left on the cage, i.e. not eaten, andc) a determined and stored amount of feed left on the cage, i.e. not eaten, during at least the immediately previous feed delivering session.

According to an embodiment of the motorized feed vehicle, the detector for determining the amount of feed leftover on the cage is arranged on an arm, such as at an outer end of an arm, optionally of an arm of a system of arms such as a robot arm, preferably arranged at the front end of the vehicle, and wherein the feed conveying arrangement is preferably arranged behind the detector on the arm as seen in the forward-driving direction of the vehicle along the row of cages.

The feed vehicle can be provided with a weighing device configured to weigh the feed container including any feed contained therein.

The weighing device can communicate with the control unit, and the control unit can register when the feed container reaches an empty state and control the feed vehicle to drive to an feed storage station in order to be filled with feed and thereafter return to the row of cages and continue delivering feed at the cage where it discontinued the feed-delivering session.

The feed vehicle can be provided with a cage identification reader configured to read an identification code on the cages, such as a bar code a QR code or a RFID. By reading the identification code on a cage, the control unit can check the position of the feed vehicle and if necessary to adjust the position of the feed vehicle.

The motorized feed vehicle can be a manned vehicle operated by an operator steering the vehicle along the row of cages and controlling the power system of the vehicle.

Additionally, the operator can handle a mouth piece of the feed-discharge device to arrange the outlet of the mouth piece at the correct position relative to the cage to deliver the amount of feed on the cage.

According to an at present preferred embodiment, the motorized feed vehicle is an unmanned vehicle, the control unit being additionally configured to control the position of the feed vehicle and the speed of the feed vehicle based on appropriate sensors, detectors and emitters and additionally to control the feed-delivering device to position the outlet thereof in a given position relative to a given cage to deliver the amount of feed on a given position of the cage, such as a wire mesh top wall of the cage.

Hard manual work is eliminated by delivering feed by means of an unmanned feed vehicle according to the present invention and feed can be delivered as frequently as necessary for offering fresh feed to the animals and at the most appropriate time, such as during twilight and during dawn and still preventing overfeeding of the animals and waste of feed.

### Brief Description of the Figures

Embodiments and examples of the invention will be described in more details in the following with regard to the accompanying figures. The figures show ways of implementing the present invention and are not to be construed as limiting to other possible embodiments falling within the scope of the attached set of claims.
Fig. 1 is a schematically perspective view of an embodiment of a feed vehicle according to the invention, as seen obliquely from behind,
Fig. 2 is a schematically top view of the feed vehicle shown in Fig. 1,
Fig. 3 is a schematically view of the feed vehicle shown in Fig. 1 and Fig. 2 seen from behind in a passage between two rows of cages in a shed,
Fig. 4 is a schematically view of a portion of the fed vehicle and shed shown in Fig. 3 as seen oblique from behind of the feed vehicle.

### Detailed Description of the Invention

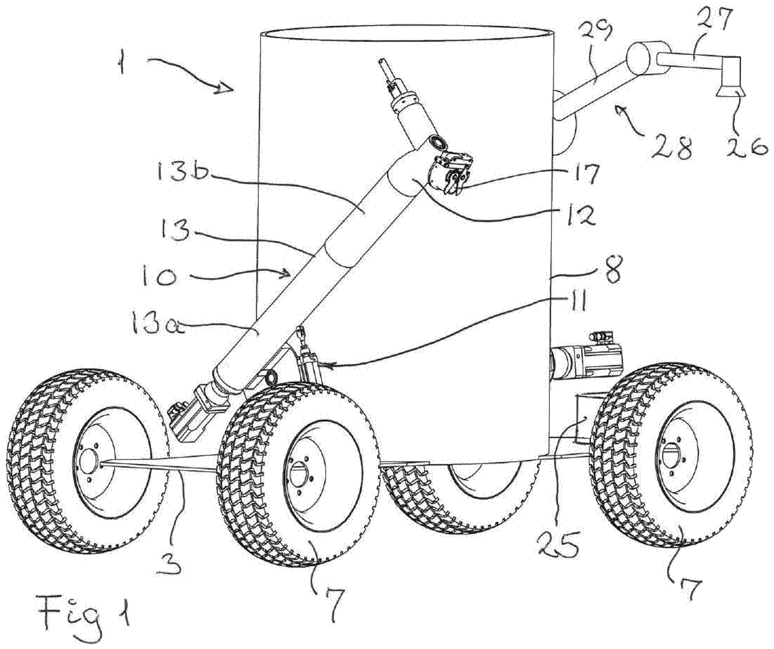

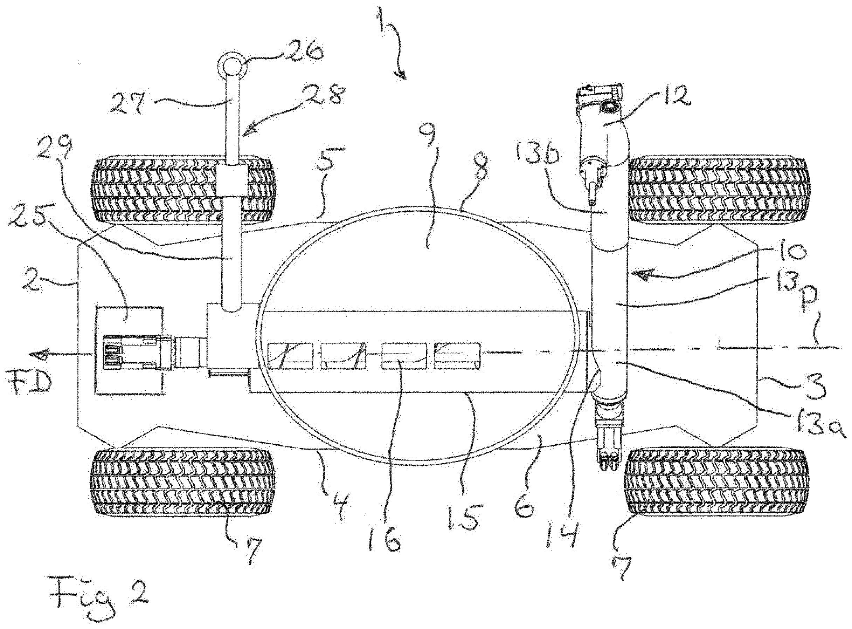

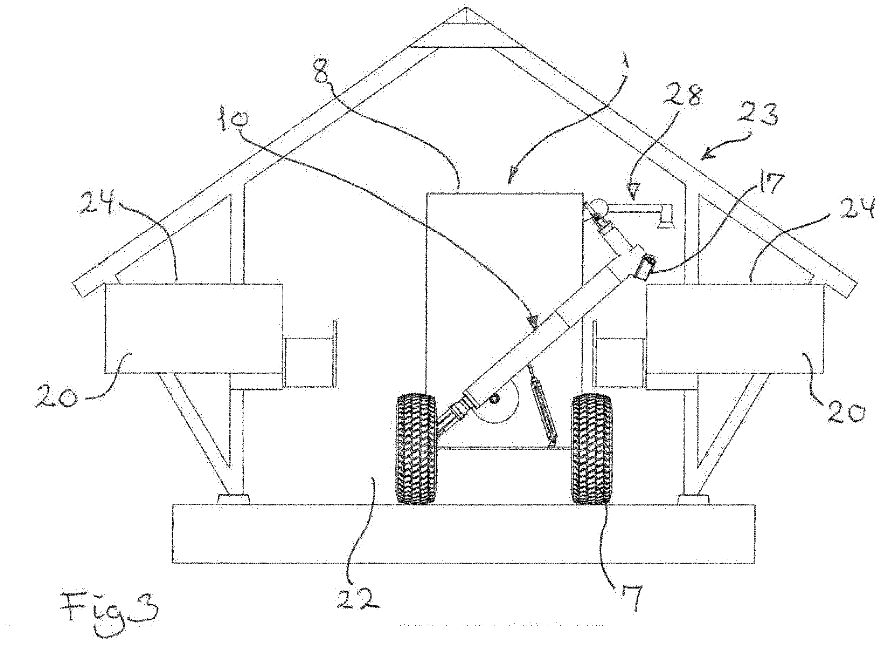

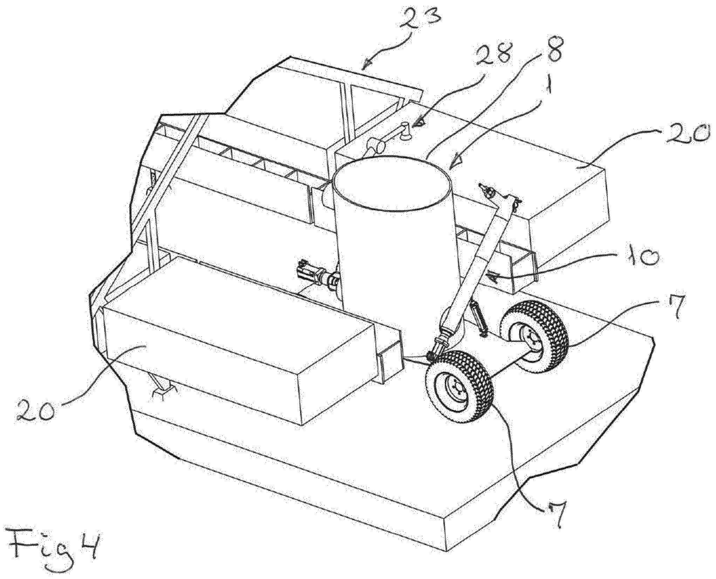

Reference is made to Figs. 1 to 4 disclosing an embodiment of a motorized unmanned feed vehicle 1 according to the present invention for feeding minks in mink cages 20 having a wire mesh top wall 24. As shown in Fig. 3 and Fig. 4, the cages 20 are arranged in two rows 21 of cages in a shed 23. The rows 21 of cages are separated by a passage 22 in which the feed vehicle 1 can drive.

The feed vehicle 1 has a front end 2, a rear end 3, a left lateral side 4 and a right lateral side 5 as seen in the forward-driving direction FD of the vehicle 1 and comprises a frame 6 supported by four steerable wheels 7 and carrying a feed container 8 having an inner space 9 for storing feed.

Additionally, the feed vehicle 1 comprises a feed-delivering device in the form of a feed-delivering arm 10 for conveying feed from the feed container 8 through a tubing 13 of the feed delivering device 10 and into an inner chamber of a feed-delivering mouthpiece 12 and out through an outlet opening 17 of the mouthpiece 12 and on to the wire mesh top walls 24 of the cages 20. Additionally, the feed vehicle comprises a programmable control unit 25 configured for controlling the amount of feed delivered to the individual cages. The feed is pumped from the feed container 8 and out through the outlet opening 17 of the mouthpiece 12 by means of a pump 15.

The feed-delivering arm 10 is at the rear end 3 of the vehicle 1 connected pivotally to the lower end of the rear of the feed container 8. The feed-delivering arm is, by means of a linear actuator 11, pivotal between the shown operating position and a rest position around a pivot axis P. In the shown operating position, the feed-delivering arm 10 extends outside the feed container 8 upwardly and laterally beyond a lateral side of the vehicle 1 in order to deliver feed to the top walls 24 of the cages 20. In a rest position, the feed discharge arm 10 is, by means of a linear actuator 11, pivoted to a more upright position to be positioned within the lateral boundaries of the vehicle 1 defined by the lateral sides and/or the wheels 7 of the vehicle 1. The position and movements of the feed-delivering arm is controlled by the control unit 25.

The feed-delivering arm 10 comprises the tubing 13 communicating at a lower end thereof with a pump outlet 14 of the pump 15. The pump 15 comprises a pump inlet 16 communicating with the interior of the feed container 8. The tubing 13 of the feed delivering arm 10 comprises a lower tubular element section 13a and an upper tubular element section 13b. The first and second tubular element sections 13a,13b are telescopically connected, allowing for decreasing and increasing the length of the feed discharge arm 10, the upper tubular element section 13b being movable between a retracted and an extended position relative to the lower tubular element section 13a.

In the present example, the pump 15 is a screw pump and is configured to convey feed from the pump outlet 14 of the pump 15 through the tubing 13 and into the feed-delivering mouthpiece 12. From the mouthpiece, the feed is pumped out through the outlet opening 17 of the mouthpiece 12.

An electronic detector 26 for detecting the amount of feed leftover on the top wall 24 of the cages is arranged pivotally at the outer end of an upper arm 27 of a detector arm system or robot arm 28. The detector 26 is e.g. a 3D camera or a 3D scanner. The detector arm system or robot arm 28 comprises additionally a lower arm 29. The lower arm 29 is connected pivotally to the front side of the feed container 8, and the lower end of the upper arm 26 is connected pivotally to the upper end of the lower arm 29. The arm system or robot arm 28 with the detector is arranged forwardly of the feed-delivering system as seen in the forward driving direction FD of the feed vehicle. The movements and position of the arm and the detector 26 of the arm system or robot arm 28 is controlled by the control unit 25 of the feed vehicle 1.

Additionally, the control unit 25 of the feed vehicle 1 is configured for controlling the steering and speed of the feed vehicle and for controlling the position of the feed vehicle based on appropriate sensors, detectors and emitters.

During a feed-delivering session the feed vehicle is driving in the passage 22 controlled by the control unit 25. When approaching a given cage 20, the detector 26 on the detector arm system 28 determines the amount of feed leftover on the cage 20. The individually metered amount of feed to be deliver to the cage is determined based on the amount of feed leftover on the cage during the previous feeding session and the planned amount of feed to be delivered to the cage according to the feeding scheme. The control unit 25 controls the movement of the feed vehicle 1 along the rows 21 of cages 20 and controls the movement of the feed vehicle 1 and the movement and position of the feed-delivering arm 10 to position the outlet opening 17 thereof at the correct position relative to the cage 20 to deliver the determined individually metered amount of feed on the correct position of the cage. The movement of the feed vehicle 1 along the row 21 of cages is continued and an individually metered amount of feed is delivered to the next a cage and the following cages in the row of cages as described above.

### LIST OF REFERENCE NUMERALS

- 1: feed vehicle
- 2: front end
- 3: rear end
- 4: left side
- 5: right side
- 6: frame
- 7: wheel
- 8: feed container
- 9: inner space
- 10: feed-delivering device, feed-delivering arm
- 11: linear actuator
- 12: mouthpiece
- 13: tubing
- 13a: lower tubular section
- 13b: upper tubular section
- 14: pump outlet
- 15: pump
- 16: pump inlet
- 17: outlet opening
- 18 19 20: cage
- 21: row of cages
- 22: tubing outlet
- 23: shed
- 24: wire mesh top wall
- 25: control unit
- 26: detector
- 27: upper arm
- 28: detector arm system/ robot arm
- 29: lower arm
- 30 FD: Forward-driving direction
- P: pivot axis

## Claims

1. A method of feeding fur animals, such as minks, in cages (20) arranged in rows by means of a motorized feeding vehicle (1), the method comprising
- during a feed-delivering session moving the feed vehicle (1) along a row of cages (20) and for each cage:
- determining the amount of feed leftover on the cage by means of an electronic detector (26), such as a 3D camera or 3D scanner arranged on the feeding vehicle,
- storing the amount of feed leftover on the cage in a database,
- determining an individually metered amount of feed based on a) a planned amount of feed to be delivered to the given cage according to a feeding scheme, b) the determined amount of feed leftover on the cage, i.e. not eaten, and c) a determined and stored amount of feed leftover on the cage, i.e. not eaten, during at least an immediately previous feed-delivering session, and
- delivering the determined individually metered amount of feed to the given cage.

2. A method according to claim 1, wherein the determined individually metered amount of feed delivered to the cage during the feed-delivering session is based on the amount of feed leftover on the cage, i.e. not eaten, during 1, 2, 3, 4, 5, 6, 7 or 8 immediately previous feed-delivering sessions.

3. A method according to claim 1 or 2, wherein the determined individually metered amount of feed delivered to the cage during the feed-delivering session is stored in the database.

4. A method according to any of the preceding claims, wherein the determined individually metered amount of feed delivered to the cage during the feed-delivering session is further based on the amount of feed delivered to the cage during 1, 2, 3, 4, 5, 6, 7 or 8 immediately previous feed-delivering sessions.

5. A method according to any of the previous claims, wherein the determined amount of feed leftover on a cage during a feed-delivering session, alternatively a feed leftover ratio between the determined amount of feed leftover on the cage and a specified amount of feed, is divided into a number of at least two groups of feed leftover comprising a group of a low amount of feed leftover, said group having an upper limit for the above amount of feed leftover or the above ratio, and a group of a high amount of feed leftover, said group having a lower limit for the above amount of feed leftover or the above ratio.

6. A method according to claim 5, wherein the specified amount of feed is the amount of feed delivered to the cage during the immediately previous feeding session.

7. A method according to claim 5, wherein the specified amount of feed is the amount of feed that according to the feeding scheme is planned to be delivered to the cage during the feed-delivering session.

8. A method according to any of the claims 5 to 7, wherein the above ratio for the lower limit is between 0.1 to 0.6.

9. A method according to any of the claims 5 to 7, wherein the above ratio for the upper limit is between 0.1 and 0.6.

10. A method according to any of the claims 5 to 9, wherein the lower limit of the group of a high amount of feed leftover is higher than the upper limit of the group of a low amount of feed leftover and one or more groups of an intermediate amount of feed leftover is provided between the group of a low amount of feed leftover and the group of a high amount of feed leftover.

11. A method according to claim 10, wherein a single group of an intermediate amount of feed leftover is provided between the group of a low amount of feed leftover and the group of a high amount of feed leftover, a lower limit of the group of an intermediate amount of feed leftover being equal to the upper limit of the group of a low amount of feed leftover and an upper limit of the group of an intermediate amount of feed leftover being equal to the lower limit of the group of a high amount of feed leftover.

12. A method according to any of the claims claim 5 to 11, wherein the determined individually metered amount of feed delivered to a cage during a feeding session is based on one or more of the following set of rules:
a(i) if, during a feeding session, the determined amount of feed leftover on a cage belongs to the group of an intermediate amount of feed leftover, and the determined amount of feed leftover on the cage during the immediately previous feeding session belonged to the group of a low amount of feed leftover,
then a full planned amount of feed according to the feeding scheme is delivered to the cage,
a(ii) if, during a feeding session, the determined amount of feed leftover on a cage belongs to the group of an intermediate amount of feed leftover, and the determined amount of feed leftover on the cage during the immediately previous feeding session belonged to the group of an intermediate amount of feed leftover,
then a full planned amount of feed according to the feeding scheme is delivered to the cage,
a(iii) if, during a feeding session, the determined amount of feed leftover on a cage belongs to the group of an intermediate amount of feed leftover, and the determined amount of feed leftover on the cage during the immediately previous feeding session belonged to the group of a high amount of feed leftover,
then a full planned amount of feed according to the feeding scheme is delivered to the cage.
b(i) if, during a feeding session, the determined amount of feed leftover on a cage belongs to the group of a low amount of feed leftover, and the determined amount of feed leftover on the cage during the immediately previous feeding session belonged to the group of a low amount of feed leftover,
then a full planned amount of feed according to the feeding scheme is delivered to the cage,
b(ii) if, during a feeding session, the determined amount of feed leftover on a cage belongs to the group of a low amount of feed leftover, and the determined amount of feed leftover on the cage during the immediately previous feeding session belonged to the group of an intermediate amount of feed leftover,
then a full planned amount of feed according to the feeding scheme is delivered to the cage,
b(iii) if, during a feeding session, the determined amount of feed leftover on a cage belongs to the group of a low amount of feed leftover, and the determined amount of feed leftover on the cage during the immediately previous feeding session belonged to the group of a high amount of feed leftover,
then a full planned amount of feed according to the feeding scheme is delivered to the cage.
c(i) if, during a feeding session, the determined amount of feed leftover on a cage belongs to the group of a high amount of feed leftover, and the determined amount of feed leftover on the cage during the immediately previous feeding session belonged to the group of a low amount of feed leftover,
then 25-75% of a full planned amount of feed according to the feeding scheme is delivered to the cage,
c(ii). if, during a feeding session, the determined amount of feed leftover on a cage belongs to the group of a high amount of feed left over, and the determined amount of feed leftover on the cage during the immediately previous feeding session belonged to the group of an intermediate amount of feed leftover,
then 25-75% of a full planned amount of feed according to the feeding scheme is delivered to the cage,
c(iii). if during a feeding session the determined amount of feed leftover on a cage belongs to the group of a high amount of feed left over, and the determined amount of feed leftover on the cage during the immediately previous feeding session belonged to the group of a high amount of feed leftover,
then no feed is delivered to the cage, and optionally an alarm is given.

13. A motorized feed vehicle (1) for carrying out any of the methods according to any of the claims 1-10, wherein the feed vehicle comprises:
- a front end (2) and a rear end (3),
- a frame (6) supported by moving elements, such as wheels (7), and carrying a feed container (8) with at least one inner space (9) for storing feed, especially pasty mink feed,
- a steering arrangement for steering the vehicle,
- a power system for powering the vehicle, e.g. an electrical power system powered by a rechargeable battery,
- a feed-delivering device (10) configured for delivering feed on a cage (20) and comprising a feed-conveying arrangement, such as a tubing (13), being at an upstream end connected to the feed in the feed container (8), and being at a downstream end provided with an outlet, such as an outlet opening (17),
- a control unit (25) configured for determining the position of the feed vehicle (1) and determining that the vehicle (1) has reached a given position for delivering feed to a corresponding given cage (20),
- the control unit (25) comprising or having access to a database with a feeding scheme with data about a planned amount of feed to be delivered to each of the cages (20) during a feeding session,
- a detector (26), such as a 3D camera or 3D scanner for determining the amount of feed left over on a cage (20),
- the control unit (25) additionally configured to control the feed delivering device (10) to deliver an individually metered feed portion to the cage (20), the individually metered feed portion being determined based on the planned amount of feed to be delivered to the cage according to the feeding scheme, the determined amount of feed left on the cage, i.e. not eaten, and a determined and stored amount of feed left on the cage, i.e. not eaten, during at least the immediately previous feed delivering session.

14. A motorized feed vehicle according to claim 13, wherein the detector for determining the amount of feed leftover on the cage is arranged on an arm (28), such as at an outer end of an arm, optionally of an arm of a system of arms, such as a robot arm, preferably arranged at the front end of the vehicle, and wherein the feed-conveying arrangement is preferably arranged behind the camera on the arm as seen in the forward-driving direction of the vehicle along the row of cages.

15. A motorized feed vehicle according to claim 13 and/or 14, wherein the vehicle is an unmanned vehicle, the control unit being additionally configured to control the position of the feed vehicle and the speed of the feed vehicle based on appropriate sensors, detectors and emitters and additionally to control the feed-delivering device to position the outlet thereof in a given position relative to a given cage to deliver the amount of feed on a given position of the cage, such as a wire mesh top wall of the cage.

## Patentansprüche

1. Verfahren zum Füttern von Pelztieren, wie z. B. Nerzen, in Käfigen (20), die in Reihen angeordnet sind, mit Hilfe eines motorisierten Fütterungsfahrzeugs (1), wobei das Verfahren umfasst
- während einer Futterzuführrunde, Bewegen des Fütterungsfahrzeugs (1) entlang einer Reihe von Käfigen (20) und für jeden Käfig:
Bestimmen der im Käfig übriggebliebenen Futtermenge mittels eines elektronischen Detektors (26), wie z. B. einer 3D-Kamera oder eines 3D-Scanners, die/der auf dem Fütterungsfahrzeug angeordnet ist,
- Speichern der im Käfig übriggebliebenen Futtermenge in einer Datenbank,
- Bestimmen einer individuell dosierten Futtermenge auf der Grundlage a) einer geplanten Futtermenge, die dem gegebenen Käfig gemäß einem Fütterungsplan zugeführt werden soll, b) der bestimmten im Käfig übriggebliebenen, d. h. nicht gefressenen Futtermenge und c) einer bestimmten und gespeicherten, im Käfig übriggebliebenen, d. h. nicht gefressenen Futtermenge während mindestens einer unmittelbar vorhergehenden Futterzuführrunde, und
- Zuführen der bestimmten individuell dosierten Futtermenge in den gegebenen Käfig.

2. Verfahren nach Anspruch 1, wobei die bestimmte individuell dosierte Futtermenge, die dem Käfig während der Futterzuführrunde zugeführt wird, auf der im Käfig übriggebliebenen, d. h. nicht gefressenen Futtermenge während 1, 2, 3, 4, 5, 6, 7 oder 8 unmittelbar vorhergehenden Futterzuführrunden basiert.

3. Verfahren nach Anspruch 1 oder 2, wobei die bestimmte individuell dosierte Futtermenge, die dem Käfig während der Futterzuführrunde zugeführt wird, in der Datenbank gespeichert wird.

4. Verfahren nach einem der vorstehenden Ansprüche, wobei die bestimmte individuell dosierte Futtermenge, die dem Käfig während der Futterzuführrunde zugeführt wird, weiter auf der Futtermenge basiert, die dem Käfig während 1, 2, 3, 4, 5, 6, 7 oder 8 unmittelbar vorhergehenden Futterzuführrunden zugeführt wurde.

5. Verfahren nach einem der vorstehenden Ansprüche, wobei die bestimmte in einem Käfig übriggebliebene Futtermenge während einer Futterzuführrunde, oder alternativ ein Verhältnis zwischen der bestimmten im Käfig übriggebliebenen Futtermenge und einer festgelegten Futtermenge, in eine Anzahl von mindestens zwei Gruppen von übriggebliebener Futtermenge unterteilt wird, umfassend eine Gruppe einer geringen übriggebliebenen Futtermenge, wobei die Gruppe eine Obergrenze für die oben genannte übriggebliebene Futtermenge oder das oben genannte Verhältnis aufweist, und eine Gruppe einer hohen übriggebliebenen Futtermenge, wobei die Gruppe eine Untergrenze für die oben genannte übriggebliebene Futtermenge oder das oben genannte Verhältnis aufweist.

6. Verfahren nach Anspruch 5, wobei die festgelegte Futtermenge die Futtermenge ist, die dem Käfig während der unmittelbar vorhergehenden Fütterungsrunde zugeführt wurde.

7. Verfahren nach Anspruch 5, wobei die festgelegte Futtermenge die Futtermenge ist, die dem Käfig gemäß dem Fütterungsplan während der Futterzuführrunde zugeführt werden soll.

8. Verfahren nach einem der Ansprüche 5 bis 7, wobei das oben genannte Verhältnis für die Untergrenze zwischen 0,1 und 0,6 beträgt.

9. Verfahren nach einem der Ansprüche 5 bis 7, wobei das oben genannte Verhältnis für die Obergrenze zwischen 0,1 und 0,6 beträgt.

10. Verfahren nach einem der Ansprüche 5 bis 9, wobei die Untergrenze der Gruppe einer hohen übriggebliebenen Futtermenge höher ist als die Obergrenze der Gruppe einer geringen übriggebliebenen Futtermenge und eine oder mehrere Gruppen einer mittleren übriggebliebenen Futtermenge zwischen der Gruppe einer geringen übriggebliebenen Futtermenge und der Gruppe einer hohen übriggebliebenen Futtermenge vorgesehen sind.

11. Verfahren nach Anspruch 10, wobei eine einzige Gruppe einer mittleren übriggebliebenen Futtermenge zwischen der Gruppe einer geringen übriggebliebenen Futtermenge und der Gruppe einer hohen übriggebliebenen Futtermenge bereitgestellt ist, wobei eine Untergrenze der Gruppe einer mittleren übriggebliebenen Futtermenge gleich der Obergrenze der Gruppe einer geringen übriggebliebenen Futtermenge ist und eine Obergrenze der Gruppe einer mittleren übriggebliebenen Futtermenge gleich der Untergrenze der Gruppe einer hohen übriggebliebenen Futtermenge ist.

12. Verfahren nach einem der Ansprüche 5 bis 11, wobei die bestimmte individuell dosierte Futtermenge, die während einer Fütterungsrunde einem Käfig zugeführt wird, auf einer oder mehreren der folgenden Regeln beruht:
a(i) wenn während einer Fütterungsrunde die bestimmte in einem Käfig übriggebliebene Futtermenge zur Gruppe einer mittleren übriggebliebenen Futtermenge gehört und die bestimmte im Käfig übriggebliebene Futtermenge während der unmittelbar vorhergehenden Fütterungsrunde zur Gruppe einer geringen übriggebliebenen Futtermenge gehörte,
dann wird dem Käfig eine gesamte geplante Futtermenge gemäß dem Fütterungsplan zugeführt,
a(ii) wenn während einer Fütterungsrunde die bestimmte in einem Käfig übriggebliebene Futtermenge zur Gruppe einer mittleren übriggebliebenen Futtermenge gehört und die bestimmte im Käfig übriggebliebene Futtermenge während der unmittelbar vorhergehenden Fütterungsrunde zur Gruppe einer mittleren übriggebliebenen Futtermenge gehörte,
dann wird dem Käfig eine gesamte geplante Futtermenge gemäß dem Fütterungsplan zugeführt,
a(iii) wenn während einer Fütterungsrunde die bestimmte in einem Käfig übriggebliebene Futtermenge zur Gruppe einer mittleren übriggebliebenen Futtermenge gehört und die bestimmte im Käfig übriggebliebene Futtermenge während der unmittelbar vorhergehenden Fütterungsrunde zur Gruppe einer hohen übriggebliebenen Futtermenge gehörte,
dann wird dem Käfig eine gesamte geplante Futtermenge gemäß dem Fütterungsplan zugeführt.
b(i) wenn während einer Fütterungsrunde die bestimmte in einem Käfig übriggebliebene Futtermenge zur Gruppe einer geringen übriggebliebenen Futtermenge gehört und die bestimmte im Käfig übriggebliebene Futtermenge während der unmittelbar vorhergehenden Fütterungsrunde zur Gruppe einer geringen übriggebliebenen Futtermenge gehörte,
dann wird dem Käfig eine gesamte geplante Futtermenge gemäß dem Fütterungsplan zugeführt,
b(ii) wenn während einer Fütterungsrunde die bestimmte in einem Käfig übriggebliebene Futtermenge zur Gruppe einer geringen übriggebliebenen Futtermenge gehört und die bestimmte im Käfig übriggebliebene Futtermenge während der unmittelbar vorhergehenden Fütterungsrunde zur Gruppe einer mittleren übriggebliebenen Futtermenge gehörte,
dann wird dem Käfig eine gesamte geplante Futtermenge gemäß dem Fütterungsplan zugeführt,
b(iii) wenn während einer Fütterungsrunde die bestimmte in einem Käfig übriggebliebene Futtermenge zur Gruppe einer geringen übriggebliebenen Futtermenge gehört und die bestimmte im Käfig übriggebliebene Futtermenge während der unmittelbar vorhergehenden Fütterungsrunde zur Gruppe einer hohen übriggebliebenen Futtermenge gehörte,
dann wird dem Käfig eine gesamte geplante Futtermenge gemäß dem Fütterungsplan zugeführt.
c(i) wenn während einer Fütterungsrunde die bestimmte in einem Käfig übriggebliebene Futtermenge zur Gruppe einer hohen übriggebliebenen Futtermenge gehört und die bestimmte im Käfig übriggebliebene Futtermenge während der unmittelbar vorhergehenden Fütterungsrunde zur Gruppe einer geringen übriggebliebenen Futtermenge gehörte,
dann werden dem Käfig 25-75 % einer gesamten geplanten Futtermenge gemäß dem Fütterungsplan zugeführt,
c(ii) wenn während einer Fütterungsrunde die bestimmte in einem Käfig übriggebliebene Futtermenge zur Gruppe einer hohen übriggebliebenen Futtermenge gehört und die bestimmte im Käfig übriggebliebene Futtermenge während der unmittelbar vorhergehenden Fütterungsrunde zur Gruppe einer mittleren übriggebliebenen Futtermenge gehörte,
dann werden dem Käfig 25-75 % einer gesamten geplanten Futtermenge gemäß dem Fütterungsplan zugeführt,
c(iii) wenn während einer Fütterungsrunde die bestimmte in einem Käfig übriggebliebene Futtermenge zur Gruppe einer hohen übriggebliebenen Futtermenge gehört und die bestimmte im Käfig übriggebliebene Futtermenge während der unmittelbar vorhergehenden Fütterungsrunde zur Gruppe einer hohen übriggebliebenen Futtermenge gehörte,
dann wird dem Käfig kein Futter zugeführt, und optional wird ein Alarm ausgelöst.

13. Motorisiertes Fütterungsfahrzeug (1) zur Durchführung eines der Verfahren nach einem der Ansprüche 1-10,
wobei das Fütterungsfahrzeug umfasst:
- ein vorderes Ende (2) und ein hinteres Ende (3),
- einen Rahmen (6), der von beweglichen Elementen, wie z. B. Rädern (7), getragen wird und einen Futterbehälter (8) mit mindestens einem Innenraum (9) zur Lagerung von Futter, insbesondere von pastösem Nerzfutter, trägt,
- eine Lenkanordnung zum Lenken des Fahrzeugs,
- ein Energieversorgungssystem zur Versorgung des Fahrzeugs mit Energie, z. B. ein Stromversorgungssystem, das von einer wiederaufladbaren Batterie gespeist wird,
- eine Futterzuführvorrichtung (10), die für die Zuführung von Futter zu einem Käfig (20) konfiguriert ist und eine Anordnung zum Transport von Futter, wie z. B. eine Rohrleitung (13), umfasst, die an einem stromaufwärts gelegenen Ende mit dem Futter in dem Futterbehälter (8) verbunden ist und an einem stromabwärts gelegenen Ende mit einem Auslass, wie z. B. einer Auslassöffnung (17), versehen ist,
- eine Steuereinheit (25), die konfiguriert ist, um die Position des Fütterungsfahrzeugs (1) zu bestimmen und zu bestimmen, dass das Fahrzeug (1) eine gegebene Position zur Zuführung von Futter zu einem entsprechenden gegebenen Käfig (20) erreicht hat,
- wobei die Steuereinheit (25) eine Datenbank mit einem Fütterungsplan mit Daten über eine geplante Futtermenge, die während einer Fütterungsrunde an jeden der Käfige (20) abgegeben werden soll, umfasst oder darauf Zugriff hat,
- einen Detektor (26), wie z. B. eine 3D-Kamera oder einen 3D-Scanner zur Bestimmung der auf einem Käfig (20) übriggebliebenen Futtermenge,
- die Steuereinheit (25), die zusätzlich zur Steuerung der Futterzuführvorrichtung (10) konfiguriert ist, um dem Käfig (20) eine individuell dosierte Futterportion zuzuführen, wobei die individuell dosierte Futterportion auf der Grundlage der geplanten Futtermenge, die dem Käfig gemäß dem Fütterungsplan zuzuführen ist, der bestimmten im Käfig übriggebliebenen, d. h. nicht gefressenen Futtermenge und einer bestimmten und gespeicherten, im Käfig übriggebliebenen, d. h. nicht gefressenen Futtermenge, zumindest während der unmittelbar vorhergehenden Futterzuführrunde, bestimmt wird.

14. Motorisiertes Fütterungsfahrzeug nach Anspruch 13, wobei der Detektor zur Bestimmung der in einem Käfig übriggebliebenen Futtermenge an einem Arm (28), wie z. B. an einem äußeren Ende eines Arms, gegebenenfalls eines Arms eines Systems von Armen, wie z. B. eines Roboterarms, angeordnet ist, der vorzugsweise am vorderen Ende des Fahrzeugs angeordnet ist, und wobei die Zuführungseinrichtung vorzugsweise in Vorwärtsfahrtrichtung des Fahrzeugs entlang der Käfigreihe gesehen hinter der Kamera am Arm angeordnet ist.

15. Motorisiertes Fütterungsfahrzeug nach Anspruch 13 und/oder 14, wobei das Fahrzeug ein unbemanntes Fahrzeug ist, wobei die Steuereinheit zusätzlich konfiguriert ist, um die Position des Fütterungsfahrzeugs und die Geschwindigkeit des Fütterungsfahrzeugs auf der Grundlage geeigneter Sensoren, Detektoren und Emitter zu steuern und zusätzlich die Futterzuführvorrichtung so zu steuern, dass sie ihren Auslass in einer gegebenen Position relativ zu einem gegebenen Käfig positioniert, um die Futtermenge an einer gegebenen Position des Käfigs, wie z. B. einer Drahtgitteroberwand des Käfigs, abzugeben.

## Revendications

1. Procédé d'alimentation d'animaux à fourrure, tels que des visons, dans des cages (20) agencées en rangées au moyen d'un véhicule d'alimentation motorisé (1), le procédé comprenant
- pendant une session de distribution de nourriture, le déplacement du véhicule d'alimentation (1) le long d'une rangée de cages (20), et, pour chaque cage :
- la détermination de la quantité de nourriture restante sur la cage au moyen d'un détecteur électronique (26), tel qu'une caméra 3D ou un scanner 3D agencé sur le véhicule d'alimentation,
- le stockage de la quantité de nourriture restante sur la cage dans une base de données,
- la détermination d'une quantité de nourriture dosée individuellement sur la base a) d'une quantité de nourriture prévue à distribuer à la cage donnée selon un programme d'alimentation, b) de la quantité déterminée de nourriture restante sur la cage, c'est-à-dire non consommée, et c) d'une quantité déterminée et stockée de nourriture restante sur la cage, c'est-à-dire non consommée, pendant au moins une session de distribution de nourriture immédiatement précédente, et
- la distribution de la quantité déterminée de nourriture dosée individuellement à la cage donnée.

2. Procédé selon la revendication 1, dans lequel la quantité déterminée de nourriture dosée individuellement distribuée à la cage pendant la session de distribution de nourriture est basée sur la quantité de nourriture restante sur la cage, c'est-à-dire non consommée, pendant 1, 2, 3, 4, 5, 6, 7 ou 8 sessions de distribution de nourriture immédiatement précédentes.

3. Procédé selon la revendication 1 ou la revendication 2, dans lequel la quantité déterminée de nourriture dosée individuellement distribuée à la cage pendant la session de distribution de nourriture est stockée dans la base de données.

4. Procédé selon l'une quelconque des revendications précédentes, dans lequel la quantité déterminée de nourriture dosée individuellement distribuée à la cage pendant la session de distribution de nourriture est en outre basée sur la quantité de nourriture distribuée à la cage pendant 1, 2, 3, 4, 5, 6, 7 ou 8 sessions de distribution de nourriture immédiatement précédentes.

5. Procédé selon l'une quelconque des revendications précédentes, dans lequel la quantité déterminée de nourriture restante sur une cage pendant une session de distribution de nourriture, ou en variante un rapport de nourriture restante entre la quantité déterminée de nourriture restante sur la cage et une quantité de nourriture spécifiée, est divisé(e) en un nombre d'au moins deux groupes de nourriture restante comprenant un groupe d'une faible quantité de nourriture restante, ledit groupe ayant une limite supérieure pour la quantité de nourriture restante ci-dessus ou le rapport ci-dessus, et un groupe d'une quantité élevée de nourriture restante, ledit groupe ayant une limite inférieure pour la quantité de nourriture restante ci-dessus ou le rapport ci-dessus.

6. Procédé selon la revendication 5, dans lequel la quantité de nourriture spécifiée est la quantité de nourriture distribuée à la cage pendant la session d'alimentation immédiatement précédente.

7. Procédé selon la revendication 5, dans lequel la quantité de nourriture spécifiée est la quantité de nourriture qu'il est prévu de distribuer à la cage pendant la session de distribution de nourriture, selon le programme d'alimentation.

8. Procédé selon l'une quelconque des revendications 5 à 7, dans lequel le rapport ci-dessus pour la limite inférieure est entre 0,1 et 0,6.

9. Procédé selon l'une quelconque des revendications 5 à 7, dans lequel le rapport ci-dessus pour la limite supérieure est entre 0,1 et 0,6.

10. Procédé selon l'une quelconque des revendications 5 à 9, dans lequel la limite inférieure du groupe d'une quantité élevée de nourriture restante est plus élevée que la limite supérieure du groupe d'une faible quantité de nourriture restante et un ou plusieurs groupes d'une quantité intermédiaire de nourriture restante sont prévus entre le groupe d'une faible quantité de nourriture restante et le groupe d'une quantité élevée de nourriture restante.

11. Procédé selon la revendication 10, dans lequel un groupe unique d'une quantité intermédiaire de nourriture restante est prévu entre le groupe d'une faible quantité de nourriture restante et le groupe d'une quantité élevée de nourriture restante, une limite inférieure du groupe d'une quantité intermédiaire étant égale à la limite supérieure du groupe d'une faible quantité de nourriture restante et une limite supérieure du groupe d'une quantité intermédiaire de nourriture restante étant égale à la limite inférieure du groupe d'une quantité élevée de nourriture restante.

12. Procédé selon l'une quelconque revendications 5 à 11, dans lequel la quantité déterminée de nourriture dosée individuellement distribuée à une cage pendant une session d'alimentation est basée sur une ou plusieurs de l'ensemble de règles suivant :
a(i) si, pendant une session d'alimentation, la quantité déterminée de nourriture restante sur une cage appartient au groupe d'une quantité intermédiaire de nourriture restante et que la quantité déterminée de nourriture restante sur la cage pendant la session d'alimentation immédiatement précédente appartenait au groupe d'une faible quantité de nourriture restante,
une pleine quantité de nourriture prévue selon le programme d'alimentation est distribuée à la cage,
a(ii) si, pendant une session d'alimentation, la quantité déterminée de nourriture restante sur une cage appartient au groupe d'une quantité intermédiaire de nourriture restante et que la quantité déterminée de nourriture restante sur la cage pendant la session d'alimentation immédiatement précédente appartenait au groupe d'une quantité intermédiaire de nourriture restante,
une pleine quantité de nourriture prévue selon le programme d'alimentation est distribuée à la cage,
a(iii) si, pendant une session d'alimentation, la quantité déterminée de nourriture restante sur une cage appartient au groupe d'une quantité intermédiaire de nourriture restante et que la quantité déterminée de nourriture restante sur la cage pendant la session d'alimentation immédiatement précédente appartenait au groupe d'une quantité élevée de nourriture restante,
une pleine quantité de nourriture prévue selon le programme d'alimentation est distribuée à la cage.
b(i) si, pendant une session d'alimentation, la quantité déterminée de nourriture restante sur une cage appartient au groupe d'une faible quantité de nourriture restante et que la quantité déterminée de nourriture restante sur la cage pendant la session d'alimentation immédiatement précédente appartenait au groupe d'une faible quantité de nourriture restante,
une pleine quantité de nourriture prévue selon le programme d'alimentation est distribuée à la cage,
b(ii) si, pendant une session d'alimentation, la quantité déterminée de nourriture restante sur une cage appartient au groupe d'une faible quantité de nourriture restante et que la quantité déterminée de nourriture restante sur la cage pendant la session d'alimentation immédiatement précédente appartenait au groupe d'une quantité intermédiaire de nourriture restante,
une pleine quantité de nourriture prévue selon le programme d'alimentation est distribuée à la cage,
b(iii) si, pendant une session d'alimentation, la quantité déterminée de nourriture restante sur une cage appartient au groupe d'une faible quantité de nourriture restante et que la quantité déterminée de nourriture restante sur la cage pendant la session d'alimentation immédiatement précédente appartenait au groupe d'une quantité élevée de nourriture restante,
une pleine quantité de nourriture prévue selon le programme d'alimentation est distribuée à la cage.
c(i) si, pendant une session d'alimentation, la quantité déterminée de nourriture restante sur une cage appartient au groupe d'une quantité élevée de nourriture restante et que la quantité déterminée de nourriture restante sur la cage pendant la session d'alimentation immédiatement précédente appartenait au groupe d'une faible quantité de nourriture restante,
25 à 75 % d'une pleine quantité de nourriture prévue selon le programme d'alimentation est distribuée à la cage,
c(ii) si, pendant une session d'alimentation, la quantité déterminée de nourriture restante sur une cage appartient au groupe d'une quantité élevée de nourriture restante et que la quantité déterminée de nourriture restante sur la cage pendant la session d'alimentation immédiatement précédente appartenait au groupe d'une quantité intermédiaire de nourriture restante,
25 à 75 % d'une pleine quantité de nourriture prévue selon le programme d'alimentation est distribuée à la cage,
c(iii) si, pendant une session d'alimentation, la quantité déterminée de nourriture restante sur une cage appartient au groupe d'une quantité élevée de nourriture restante et que la quantité déterminée de nourriture restante sur la cage pendant la session d'alimentation immédiatement précédente appartenait au groupe d'une quantité élevée de nourriture restante,
aucune nourriture n'est distribuée à la cage, et facultativement une alarme est déclenchée.

13. Véhicule d'alimentation motorisé (1) pour mettre en oeuvre l'un quelconque des procédés selon l'une quelconque des revendications 1 à 10,
dans lequel le véhicule d'alimentation comprend :
- une extrémité avant (2) et une extrémité arrière (3),
- un châssis (6) supporté par des éléments mobiles, tels que des roues (7), et transportant un récipient d'alimentation (8) avec au moins un espace interne (9) pour stocker de la nourriture, en particulier de la nourriture pâteuse pour visons,
- un agencement de direction pour diriger le véhicule,
- un système d'alimentation pour alimenter le véhicule, p. ex. un système d'alimentation électrique alimenté par une batterie rechargeable,
- un dispositif (10) de distribution de nourriture configuré pour distribuer de la nourriture sur une cage (20) et comprenant un agencement de transport de nourriture tel qu'un tube (13), se trouvant à une extrémité amont reliée à la nourriture dans le récipient d'alimentation (8) et se trouvant à une extrémité aval dotée d'une sortie, telle qu'une ouverture de sortie (17),
- une unité de commande (25) configurée pour déterminer la position du véhicule d'alimentation (1) et déterminer que le véhicule (1) a atteint une position donnée pour distribuer de la nourriture à une cage (20) donnée correspondante,
- l'unité de commande (25) comprenant une base de données ou ayant accès à celle-ci avec un programme d'alimentation avec des données concernant une quantité de nourriture prévue à distribuer à chacune des cages (20) pendant une session d'alimentation,
- un détecteur (26), tel qu'une caméra 3D ou un scanner 3D pour déterminer la quantité de nourriture restante sur une cage (20),
- l'unité de commande (25) étant configurée en outre pour commander le dispositif (10) de distribution de nourriture de façon à distribuer une portion de nourriture dosée individuellement à la cage (20), la portion de nourriture dosée individuellement étant déterminée sur la base de la quantité de nourriture prévue à distribuer à la cage selon le programme d'alimentation, de la quantité déterminée de nourriture restante sur la cage, c'est-à-dire non consommée, et d'une quantité déterminée et stockée de nourriture restante sur la cage, c'est-à-dire non consommée, pendant au moins la session de distribution de nourriture immédiatement précédente.

14. Véhicule d'alimentation motorisé selon la revendication 13, dans lequel le détecteur pour déterminer la quantité de nourriture restante sur la cage est agencé sur un bras (28), par exemple à une extrémité externe d'un bras, facultativement d'un bras d'un système de bras, par exemple un bras robotisé, de préférence agencé à l'extrémité avant du véhicule, et dans lequel l'agencement de transport de nourriture est de préférence agencé derrière la caméra sur le bras vu dans la direction de marche avant du véhicule le long de la rangée de cages.

15. Véhicule d'alimentation motorisé selon la revendication 13 et/ou la revendication 14, dans lequel le véhicule est un véhicule sans conducteur, l'unité de commande étant configurée en outre pour commander la position du véhicule d'alimentation et la vitesse du véhicule d'alimentation sur la base de capteurs, de détecteurs et d'émetteurs appropriés et en outre pour commander le dispositif de distribution de nourriture pour positionner la sortie de celui-ci dans une position donnée par rapport à une cage donnée pour distribuer la quantité de nourriture sur une position donnée de la cage, telle qu'une paroi supérieure grillagée de la cage.
